# EUROPEAN PATENT SPECIFICATION

(11) **EP 1 159 676 B1**
(45) Date of publication and mention of the grant of the patent: **12.01.2005**
(21) Application number: 00914539.2
(22) Date of filing: 03.02.2000
(51) Int. Cl.: G06F 9/44, H04L 12/28, H05B 37/02

(54) **METHOD AND SYSTEM FOR CONTROLLING LIGHTING**
VERFAHREN UND SYSTEM ZUR BELEUCHTUNGSKONTROLLE
PROCEDE ET SYSTEME DE REGLAGE DE L'ECLAIRAGE

(30) Priority: 03.02.1999 US 118668 P; 28.05.1999 US 322852; 28.05.1999 US 322964; 28.05.1999 US 322207; 28.05.1999 US 322459; 28.05.1999 US 322643; 28.05.1999 US 322965; 28.05.1999 US 322962; 28.05.1999 US 322455; 28.05.1999 US 322457
(43) Date of publication of application: 05.12.2001
(73) Proprietor: Gates, William H., III, Medina, WA 98039 (US)
(72) Inventor: GELLAND, Torsten, Irvine, CA 92612 (US); PYLE, Harry, S., Bellevue, WA 98005 (US)
(74) Representative: Grünecker, Kinkeldey, Stockmair & Schwanhäusser Anwaltssozietät
(86) International application number: PCT/US2000/003097
(87) International publication number: WO 2000/046671

(56) References cited:
- US-A- 5 086 385
- CUSTOM SOLUTIONS INC., INDIALANTIC, FL, US: "HOMEVISION-PC. OWNER'S MANUAL. VERSION 2.62" TECHNICAL MANUAL, [Online] 1996, XP002141309 Retrieved from the Internet: <URL:http://www.csi3.com/HV_PC/manualpc.pd f> [retrieved on 2000-06-27]
- DOULIGERIS C., KHAWAND C., KHAWAND J.: "A PLATFORM FOR A HOME AUTOMATION APPLICATION LAYER DESIGN" INTERNATIONAL JOURNAL OF MINI AND MICROCOMPUTERS, US, ACTA PRESS, ANAHEIM, CALIFORNIA, US, vol. 18, no. 1, 1 January 1996 (1996-01-01), pages 51-60, XP000593971 ISSN: 0702-0481
- WACKS K.: "INTERNATIONAL MODEL OF A LIGHTING CONTROL SYSTEM" HTINEWS, [Online] June 1998 (1998-06), pages 1-5, XP002141310 Retrieved from the Internet: <URL:http://www.hometoys.com/htinews/jun98 /articles/wacks/wacks.htm> [retrieved on 2000-06-27]

## Description

The described technology relates generally to a system for controlling environmental conditions and, more particularly, to a computer system architecture for controlling the environmental conditions.

A large environment, such as an office building, a factory, or a large house, may have many environmental conditions that can be controlled. These environmental conditions may include lighting, room temperature, ventilation, other environmental conditions that may be electrically controlled, and so on. For example, such a large environment may have hundreds or thousands of lights that can be turned on or off or placed in an intermediate state using a dimmer. Multiple lights within such an environment may be wired to a single circuit. All the lights on a single circuit are controllable as a unit and are thus in the same state. For example, all lights on a circuit may be at 50% intensity when a dimmer is used. The lights in such large environments are typically controllable by light switches and a computer system. Light switches may be located throughout the environment in areas near where the lights are located. For example, in a large house, a light switch for controlling lights within the kitchen may be located in the kitchen itself. Computer systems have been developed to control the turning on and turning off lights within such environments. For example, a computer system that controls the lighting of a building may automatically turn off certain lights at night to conserve energy. These computer systems for controlling lights are generally remotely from the lights and centrally located in that a computer system at one location can control all the lights.

Other environmental conditions also have manual controllers that may be located throughout the environment and a computer system controller that is centrally located. For example, a heating system may have a temperature control device located in each room of a house to control the temperature within the room, and a central heating system controller to control the temperature in any room. A person either sets the temperature for a room at the control device in the room or at the central controller.

US 5,086,385 describes a system for and a method of providing an expandable home automation controller which supports multiple numbers, and multiple different types of data communications with both appliances and subsystems within the home as well as systems external to the home. The system is based upon a central processor, such as a microprocessor-based computer, and is connected by means of a data bus to control the various products and subsystems within a home or commercial building, such as lighting systems, security systems, various sensors, multiple external terminals, as well as to allow for the input of commands by a variety of means such as touchscreens, voice recognition systems, telephones, custom switches or any device capable of providing an input to a computer system. The system functions can be readily controlled by the user utilizing a high resolution graphics display and associated touchscreen interface.

The use of only such locally located controller and a central computer system for controlling the environmental conditions has several disadvantages. For example, a person in one area who would like to control the environmental conditions in an adjacent area would typically either need go to the other area to adjust the environmental conditions or go to the central computer system and request that the computer system change the environmental condition in that other area. Another disadvantage is that the user interface of such a central computer system is typically cumbersome. It may be difficult to browse through and locate the user interface for controlling the desired environmental condition in the desired room. Also, it may be difficult for a user to fully appreciate the effects of the change (*e.g*, actual level of light intensity) unless that person is actually in the room. It would be desirable to have a technique that would overcome these disadvantages.

A method and system for controlling environmental conditions is provided. In one embodiment, the environment controlling system provides a lighting system that controls the lighting of the environment. The lighting system provides an architecture that includes a scene description data structure. A scene defines one or more circuits and a target state for the lights on those circuits. The scene description data structure specifies circuits within a scene and specifies target a state for the lights on those circuits within a scene. The lighting system provides a lighting gateway that retrieves and provides scene descriptions to assist in generating a user interface for enabling scenes (*i. e.,* putting the lights of the circuits of the scene in the target state), and that receives requests to enable scenes and then request a lighting controller to enable the target state for each circuit within the scene. Each space (e.g., area or room) within the environment has a lighting component that provides a standard programmatic interface to the control the lights for that space. The lighting component retrieves scene descriptions from the lighting gateway and receives requests from a user control point device to enable a scene and then forwards the requests, to the lighting gateway. The lighting system also allows for the specifying of groups of lights within a space. Each user control point device is associated with a primary group of lights. For example, the primary group of lights would typically be the circuits of lights within the room in which the user control point device is located. The lighting system initializes the user control point device to display a user interface for controlling the primary group of lights. A user can request the lighting system, to display the user interface for another group of lights at that user control point device. Thus, the lighting system allows lights from multiple spaces to be controlled by a single user control point device located in one space. The lighting system also provides a feedback technique that notifies a user that the lighting controller has been successfully notified to enable a scene as requested by the user.

The environment controlling system also provides an overall architecture for controlling the environmental conditions in a distributed object environment. In one embodiment, a group of environmental condition is associated with each space. A software component associated with the space provides a software component that is customized to each environmental condition that is related to that space. The software components provide an interface between a user interface component and an environmental gateway. The user interface component provides a user interface for controlling and viewing the environmental conditions. The environmental gateway receives commands for each of the associated software components and controls the environmental conditions through an environmental controller. In one embodiment, each environmental gateway controls one type of environmental condition.
Figure 1 illustrates the display of a user control point device for controlling lights in one embodiment.
Figure 2 is a block diagram illustrating the hierarchical relationship of circuits within a building.
Figure 3 illustrates a scene description table.
Figure 4 illustrates a group table.
Figure 5 illustrates a space/group table.
Figure 6 is a block diagram illustrating the overall architecture of the lighting system.
Figure 7 is a flow diagram of the processing performed by the lighting user interface component in one embodiment.
Figure 8 is a flow diagram of a resource is up function of the lighting component ("LC").
Figure 9 is a flow diagram of a function for retrieving groups from the lighting component.
Figure 10 is a flow diagram of an enable scene function of the lighting component.
Figure 11 is a flow diagram of the enable scene function of the lighting gateway.

A method and system for controlling environmental conditions in an environment is provided. The environmental controlling system in one embodiment provides an architecture that allows environmental conditions to be controlled from a user control point device, such as a touch panel display. When the environmental controlling system controls lights, a lighting system allows for scenes to be defined which specify the state of lights controlled by that scene. A scene is a collection of circuits with a target state for the lights on those circuits. For example, a scene may include all the circuits within a room and may specify that the target state is to put the lights on those circuits at high intensity. Another scene may specify only a portion of the circuits within a room and indicate a target intensity that is low. To assist a user in selecting a scene to be enabled, the lighting system displays a visual indication of each possible scene on a user control point device. When the user selects one of visual indications, the lighting system requests a lighting controller to put each of the circuits of the scene into the target state of the scene. Each scene may also specify the transition time or change time that it should take to transition from the current state of the lights to the target state. The lighting system allows for the control of lights in rooms other than the room in which the user control point device is currently located. In addition, the lighting control system provides feedback when the lighting system has successfully notified the lighting controller that a scene is to be enabled.

The environmental controlling system provides an architecture that includes an environmental gateway, an environmental component, and a user interface component. The environmental gateway interfaces with an environmental controller and forwards requests from the environmental component to the environmental controller. The environmental component receives requests from its user interface components to adjust the environmental condition and forwards those requests to the environmental gateway. The user interface module provides a user interface that allows a user to select a setting for a condition (*e.g.*, a certain temperature) and then forwards that request to the environmental component.

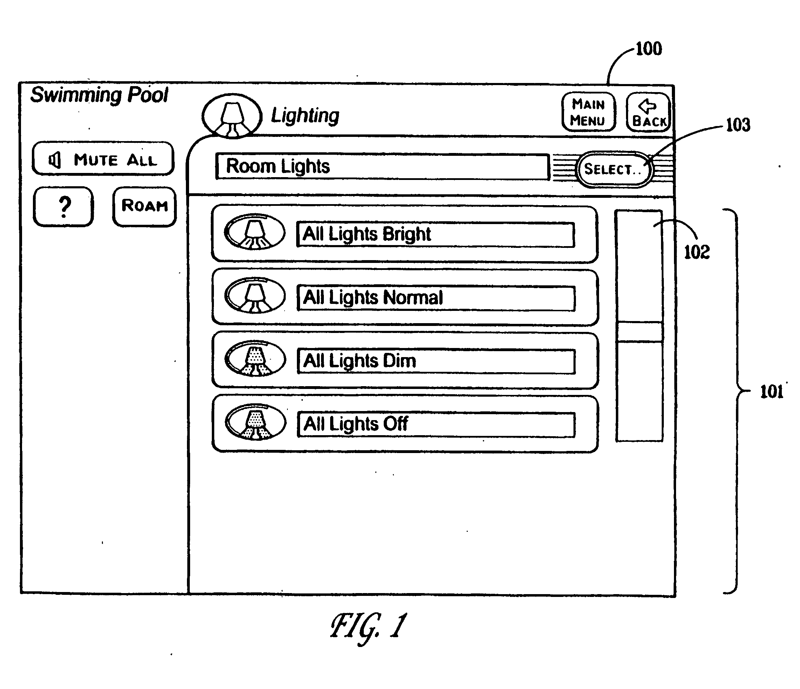

Figure 1 illustrates the display of a user control point device for controlling lights in one embodiment. The display 100, which may be a touch-sensitive device, includes a lighting panel 101. This display indicates that the user control point device is currently accessing the services associated with the swimming pool space. The display indicates that the user interface for the service associated with the lighting system is currently displayed. Other services may include controlling a stereo system or controlling a heating system. The lighting panel indicates that the "pool lights" can be controlled from the panel. The panel displays a visual indication of each scene that is defined for the swimming pool space. In this example, four scenes are defined for the space, which are "All Lights Bright," "All Lights Normal," "All Lights Dim," and "All Lights Off." When a user selects a visual indication of a scene by, for example, touching the visual indication, the lighting system causes the lights of the circuits of that scene to be set to the target state. The panel also includes a scroll bar 102 for setting the brightness level of the lights within the space. When selected, the select button 103 displays a list of other spaces whose lights can be controlled from this user control point device. When the user selects another space, the user interface system displays a lighting panel that is appropriate to that space in a format similar to that shown in Figure 1. In certain situations, it may not be easy to visually represent on the display the current state of all the lights in a space. For example, if one scene for a space includes less than all the circuits in the space (*e.g.*, circuits for controlling the floor lights but not overhead lights) and that scene is enabled, then the state of the lights within the room is a combination of two scenes. The two scenes may be a scene that specifies that all lights in the space to be at high intensity and another scene that specifies that only the floor lights in the space are to be at a low intensity. It may be difficult to visually represent the states of the lights that may be a combination of many scenes. Moreover, the current state of the lights may not be readily apparent to a user when the user is controlling the lights from another space. To assist a user in knowing whether a scene has been enabled, the lighting system provides feedback or acknowledgement to the user after the light controller has been successfully instructed to enable a selected scene. In one embodiment, this feedback may be the momentary or temporary highlighting of the visual indication of the scene on the display. Alternatively, the feedback could be audio.

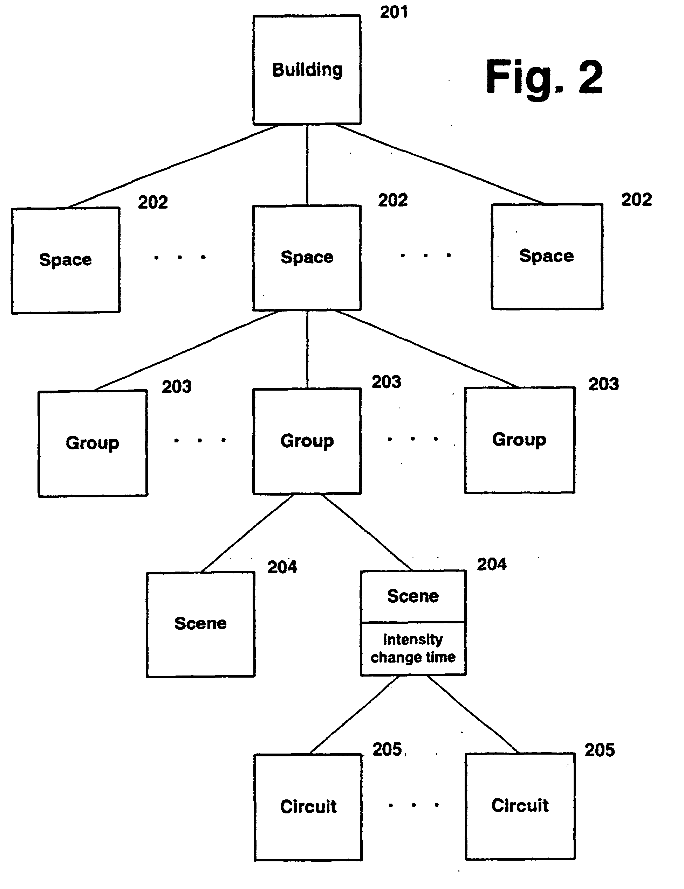

Figure 2 is a block diagram illustrating the hierarchical relationship of circuits within a building. At the top of the hierarchy is a node 201 that represents the building. The building has spaces that are represented by nodes 202. Each space may have multiple groups of associated lights as represented by nodes 203. For example, a media room may have a group that specifies the scenes within the media room and may have a group that specifies scenes within an adjacent room, such as a hall. Also, two spaces, such as a media room and an adjacent hall, may share the same group. Each group may have multiple associated scenes as represented by nodes 204. Each scene may have multiple associated circuits as represented by nodes 205. Each scene also has a target state. For example, a target state may be to set the lights of the circuit to 50% intensity. One skilled in the art will appreciate that the target state may include other visual effects such as automatically varying the intensity of the lights. For example, the visual effect may be the blinking of the lights. In one embodiment, each scene also has an associated change time that indicates the time that it will take to transition the lights from their current state to their target state. For example, if the change time is 3 seconds and the lights are currently at 100% intensity, then when a 50% intensity scene is selected, it will take 3 seconds to transition from 100% to 50% intensity.

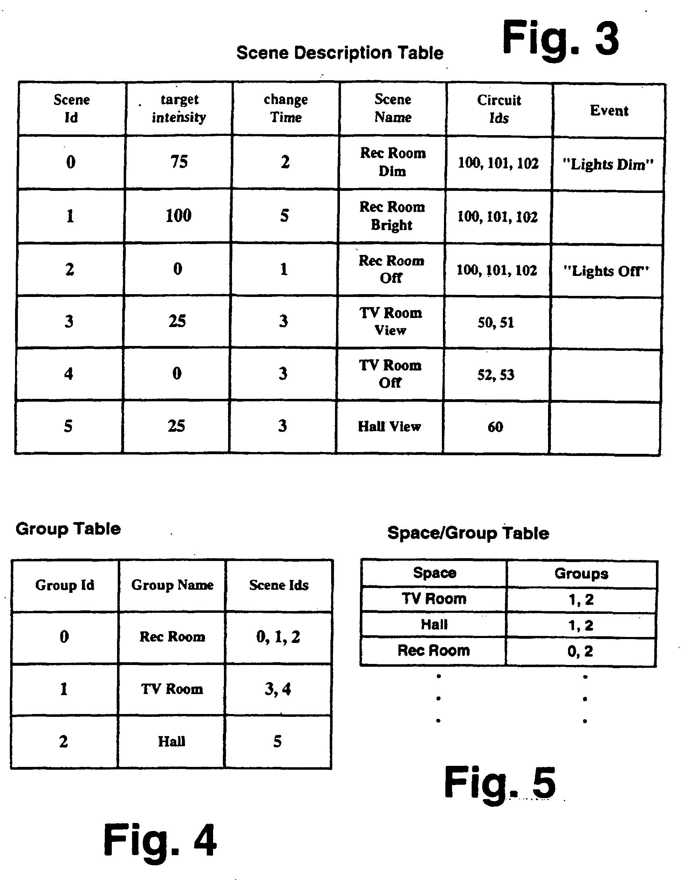

Figures 3-5 illustrate the data structures that define scenes and groups. These data structures are part of a scene description file. Figure 3 illustrates a scene description table. The scene description table contains information describing the circuits and target state associated with each scene. In this example, each row of the scene description table corresponds to one scene. Each row contains the scene identifier, the target intensity for the scene, the transition time for the scene, the name of the scene, the identifiers of the circuits within the scene, and an event. For example, the row for the scene with an identifier of "2" indicates that the target intensity is 0, the transition time is 1 second, the scene name is "Rec Room Off," the circuits of the scene are 100, 101, and 102 and the event is "lights off." When a scene is enabled, the corresponding event can be broadcast to notify the various software components of the system. Figure 4 illustrates a group table. The group table identifies the scenes within a particular group. Each row of the group table corresponds to a single group. Each row includes a group identifier, a group name, and the identifiers of the scenes within that group. For example, the row for the scene with an identifier of "1" indicates that the name of the group is "TV Room" and that the identifiers of the scenes within that group are 3 and 4. Figure 5 illustrates a space/group table. The space/group table contains information describing the groups that are accessible from a given space. Each row of the space/group table corresponds to one space. Each row contains the name of the space and the identifiers of the groups within the space. For example, the row for the space with the name of "Hall" indicates that groups 1 and 2 are associated with that space. The space/group table may also indicate which group is the primary group for the space.

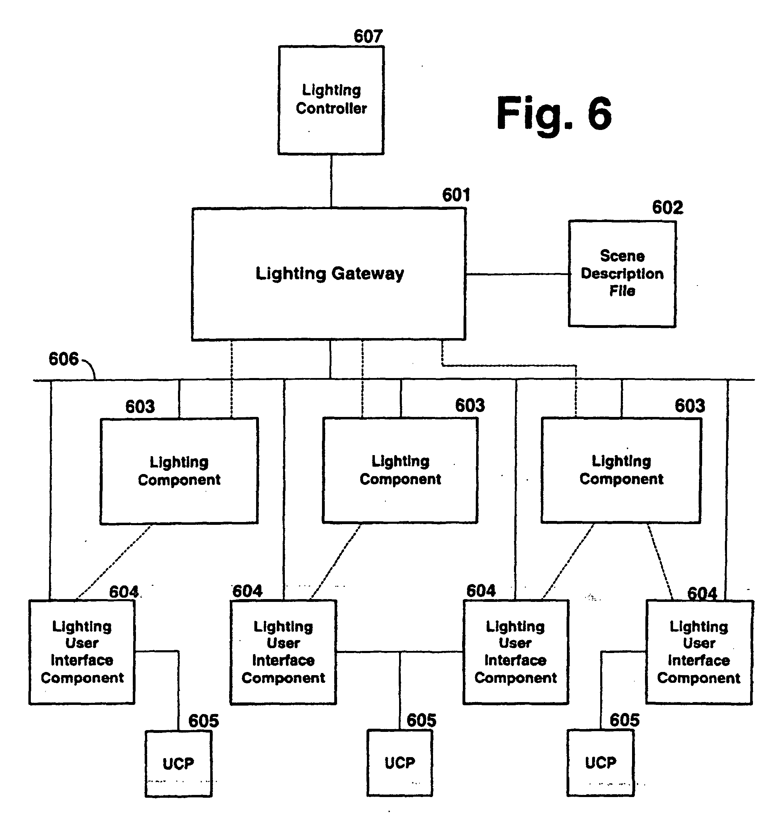

Figure 6 is a block diagram illustrating the overall architecture of the lighting system. The lighting system may be implemented in a distributed computer system. Each computer may include a central processing unit, a memory, and input/output devices. The components of the lighting system may be implemented in software and use data structures that are stored on a computer-readable medium and that can be transmitted via a computer-readable data transmission medium. The lighting system includes a lighting gateway 601, a scene description file 602, lighting components 603, and lighting user interface components 604. The lighting user interface components interact with the user control point devices 605. The various components may execute on different computers and may be interconnected via communications channel 606. The communications channel may be a logical interconnection between components on the same computer. The dashed lines indicate which components directly communicate with each other. For example, a lighting user interface component communicates directly with a lighting component. The lighting gateway controls the lighting controller 607. The lighting controller provides the interface between the lighting system and the switching mechanism for the lights. The lighting gateway provides three primary services. First, it provides access to the scene description file, which includes the scene description table, the group table, and the space/group table. Second, it receives requests to enable a scene, retrieves the circuit information for that scene from the scene description file, and then instructs the lighting controller to place the circuits of that scene in the target state. Third, the lighting gateway may send out a notification when the lighting controller becomes available or unavailable. The lighting components, one for each space, provide a programmatic interface for receiving requests to control lighting and to instruct the lighting gateway accordingly. The lighting user interface components are provided by the lighting components in one embodiment and serve as the interface between the user control point device and lighting components. The lighting user interface components are responsible for generating the user interface appropriate to control the lighting. In one embodiment, the components may be implemented as objects in the object-oriented sense. The lighting user interface component initially generates a display of the scenes that are available to control the lighting within the space associated with the lighting user interface component. The lighting user interface component retrieves the groups associated within the space from a lighting component, which in turn, retrieves the group associations from the lighting gateway. When a user selects a scene, the lighting user interface component requests the lighting component to enable the scene, which in turn passes the request to the lighting gateway, which instructs the lighting control to enable that scene. After the lighting controller has been successfully instructed, the lighting user interface component may provide feedback to the user. One skilled in the art will appreciate that the overall architecture of the lighting system can be used to control other environmental conditions. The concepts of a scene, however, may not be applicable when controlling some environmental conditions other than lighting.

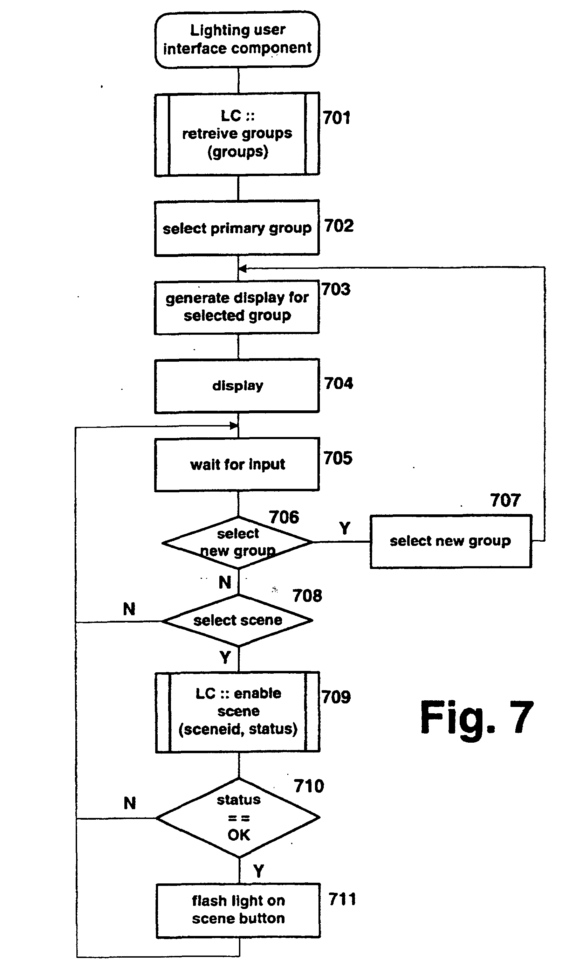

Figures 7-11 are flow diagrams illustrating example processing of components of the lighting system. Figure 7 is a flow diagram of the processing performed by the lighting user interface components in one embodiment. The lighting user interface components generate displays for controlling the lighting, receive requests from users to enable scenes, and forward the requests to the associated lighting component. In step 701, the component invokes the retrieve groups function of the lighting component to retrieve the groups associated with the space of the user control point device. In step 702, the component selects the primary group for the space, which may be the first group in a list of groups. In steps 703-711, the component loops displaying the user interface for the currently selected group and directing the lighting component to enable scenes selected by a user. In step 703, the component generates a display for the selected group. In step 704, the component displays the generated display. In step 705, the component waits for user input. In step 706, if the input is the selection on the new group, then the component continues at step 707, else the component continues at step 708. In step 707, the component selects the new group and loops to step 703 to display the user interface for the group. In step 708, if the input is the selection of a scene, then the component continues at step 709, else the component loops to step 705 to wait for other user input. In step 709, the component invokes the enable scene function of the lighting component passing the identifier of the scene and receiving a status in return. The status indicates whether the scene enabling instructions were successfully communicated to the lighting controller. If the lighting controller is for some reason off line or if an error is detected when invoking the functions of the components, then an error is returned. In step 710, if the status is okay, then the component continues at step 711, else the component loops to step 705 to wait for user input. In step 711, the component outputs a momentary acknowledgement that the scene was successfully enabled. In one embodiment, the acknowledgement is the momentary highlighting of the visual indication of the scene on the user control point device. The component then loops to step 705 to wait for user input.

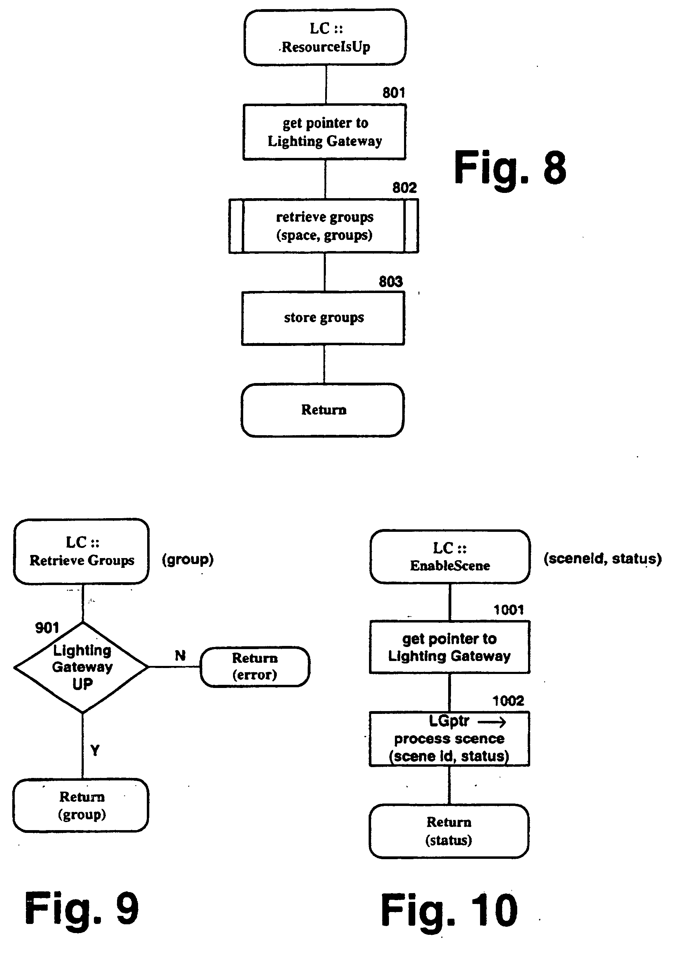

Figure 8 is a flow diagram of a resource is up function of the lighting component ("LC"). This function is invoked when the lighting gateway enters the up state, that is when it can receive requests to control the lights. The function retrieves the groups of scenes associated with the space. Each lighting component is configured to be associated with a space. In step 801, the function retrieves a pointer to the lighting gateway. In step 802, the function invokes the retrieve groups function of the lighting gateway passing an indication of the space and receiving the groups for that space in return. In step 803, the function stores the retrieved group information so that information can be provided when requested by the lighting user interface components. The function then returns.

Figure 9 is a flow diagram of a function for retrieving groups from the lighting component. This function returns the group information that was previously provided by the lighting gateway. In step 901, if the lighting gateway is currently up, then the function retrieves and returns the group information that was previously stored. Otherwise, the function returns an error.

Figure 10 is a flow diagram of an enable scene function of the lighting control interface component. The function is passed a scene identifier, instructs the light gateway component to enable the scene, and returns a status indicator. In step 1001, the function retrieves a pointer to the lighting gateway. In step 1002, the function invokes the enable scene function of the lighting gateway passing the scene identifier and receiving the status in return. The function then returns with that status.

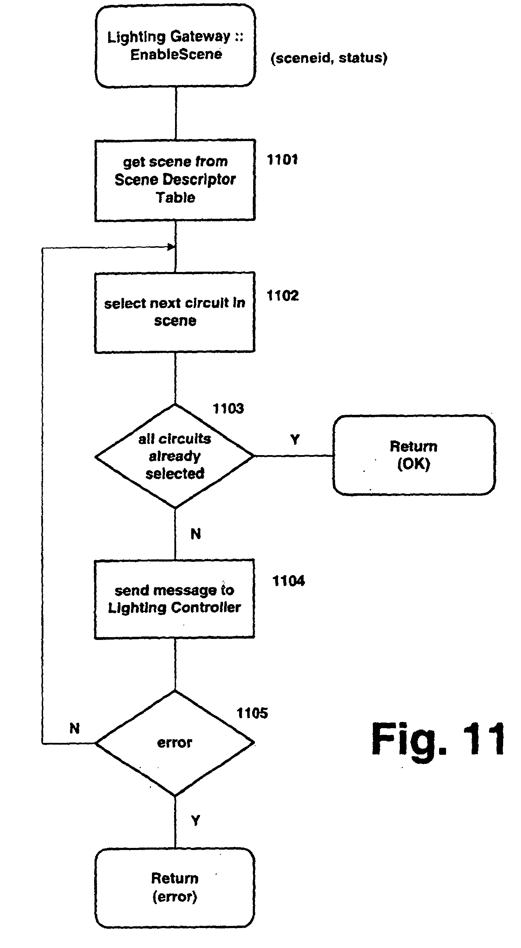

Figure 11 is a flow diagram of the enable scene function of the lighting gateway. This function is passed a scene identifier, directs the lighting controller to place the lights of the circuits of that scene in their target state, and returns the status. In step 1101, the function retrieves the information for the scene from the scene descriptor table. In steps 1102-1105, the function loops selecting each circuit in the scene and directing the lighting controller to put the circuit in its target state. In step 1102, the function selects the next circuit in the scene. In step 1103, if all circuits have already been selected, then the function returns a status of okay, else the function continues at step 1104. In step 1104, the function sends a message to the lighting controller to put the selected circuit in the target state. In step 1105, if an error occurs in sending the message to the lighting controller, then the function returns an error, else the function loops to step 1102 to select the next circuit in the scene.

Although specific embodiments of, and examples of, the present invention are described for illustrative purposes, it is not intended that the invention be limited to these embodiments. Equivalent methods, structures, processes, steps and other modifications are within the scope of the invention. For example, in one embodiment, the lighting gateway may download a description of the scenes to the lighting controller. Thus, whenever the lighting gateway receives a request to enable a scene, it can check a local cache to determine whether the scene is valid. If the scene is valid, the lighting gateway requests the lighting controller to enable the scene. Otherwise, the lighting gateway reports an error. An environmental controlling system can use a spatial hierarchy for controlling environmental conditions in a manner that is analogous to controlling the displaying of images as described in the International Application No. WO-A-00/46660 entitled"Method and System for Distributing Art". An environmental controlling system may be implemented using the techniques and facilities described in the International Application No. WO-A-00/46675 entitled "Method and System for Tracking Software Components''. Accordingly, the invention is not limited to the specific embodiments but instead the scope of the invention is specified by the following claims.

## Claims

1. A computer system for controlling lights within a distributed computing environment, with each light being on a circuit, comprising:
a scene description data structure (602) for specifying circuits within a scene and target states for the circuits within a scene;
a lighting gateway (601) for retrieving and providing scene descriptions from said scene description data structure (602) when requested and for receiving requests to enable a scene and for notifying a lighting controller (607) to enable the target state for each circuit within the scene that is requested to be enabled;
a lighting component (603) for each space from which lights can be controlled for requesting and retrieving the scene descriptions from the lighting gateway (601) and for receiving requests generated from a user interface (604, 605) to enable a scene and for forwarding the request to the lighting gateway (601); and
a communications bus (606),
wherein the communications bus (606) communicatively couples said user interface (604, 605), said lighting component (603) and said lighting gateway in the distributed computing environment.

2. The computer system of claim 1, wherein the user interface (604, 605) comprises:
a lighting user interface component (604) for each space for requesting the lighting component (603) for scene descriptions and for controlling a user control point device (605) to present a graphical user interface for controlling the lights within the space.

3. The computer system of claim 1 or 2, wherein the lighting gateway (601) is adapted for notifying the lighting component (603) when the lighting controller (607) changes state.

4. The computer system of one of the claims 1 to 3, wherein the scenes for a space are organized into a group and wherein a user can control scenes in multiple groups from a single control point device (605).

5. A method for controlling an environmental condition in a distributed computing environment having a plurality of scenes and a plurality of user control point devices (605), wherein a scene is a collection of scene component descriptors, wherein each scene component descriptor at least identifies a circuit and a target state for the circuit, comprising:
receiving a selection of a scene of the plurality of scenes from a user control point device (605) of the plurality of user control point devices;
in response to said receiving, requesting a circuit controller (607) to place each of the circuits identified by the corresponding scene component descriptors of the scene at the target state for the scene; and
receiving from the circuit controller (607) a notification when the circuits of the scene have been driven to the target state.

6. The method according to claim 5, wherein a scene component descriptor further includes an associated time to reach the target state for the circuit identified, and wherein said requesting includes requesting the circuit controller (607) to place each of the circuits of the scene into the respective target state for the scene over the time periods specified by the respective times to reach associated with the scene descriptor components.

7. The method according to claim 5 or 6, wherein the user control point device (605) is a touch panel display.

8. The method according to one of the claims 5 to 7, wherein the environmental condition is at least one of lighting and heating.

9. The method according to one of the claims 5 to 8, wherein the user control point device (605) displays a plurality of visual indications corresponding to each possible scene.

10. The method according to one of the claims 5 to 9, wherein the target state is one of no lighting, dim lighting, normal lighting, bright lighting, blinking lighting and a temperature.

11. The method according to one of the claims 5 to 10, further comprising in response to said receiving, receiving from the circuit controller (607) an indication of the current state of the circuits.

12. The method according to one of the claims 5 to 11, further comprising rendering the notification on the user control point device to assist a user in knowing whether the scene has been enabled.

13. The method according to claim 12, wherein said rendering includes at least one of providing a visual indication relating to the scene on a display of the user control point device and providing audio feedback.

14. The method according to claim 5, wherein the target state may include an effect including automatic variation of an intensity of a circuit and a repeated turning off and on of the circuit.

## Patentansprüche

1. Computersystem zum Steuern von Leuchten in einer verteilten Computerumgebung, wobei sich jede Leuchte in einem Stromkreis befindet, und das umfasst:
eine Szenariobeschreibungs-Datenstruktur (602), die Stromkreise innerhalb eines Szenarios und Soll-Zustände für die Stromkreise innerhalb des Szenarios angibt;
ein Beleuchtungs-Gateway ( 601), das bei Anforderung Szenariobeschreibungen aus der Szenariobeschreibungs-Datenstruktur (602) abruft und bereitstellt und Anforderungen zum Aktivieren eines Szenarios empfängt und eine Beleuchtungssteuerung (607) informiert, um den Soll-Zustand für jeden Stromkreis in dem Szenario zu aktivieren, das aktiviert werden soll;
eine Beleuchtungskomponente (603) für jeden Raum, dessen Leuchten gesteuert werden können, die die Szenariobeschreibungen von dem Beleuchtungs-Gateway (601) anfordert und abruft und über eine Benutzerschnittstelle (604, 605) erzeugte Anforderungen zum Aktivieren eines Szenarios empfängt und die Anforderung an das Beleuchtung-Gateway (601) weiterleitet; und
einen Datenübertragungsbus (606),
wobei der Datenübertragungsbus (606) die Benutzerschnittstelle (604,. 605), die Beleuchtungskomponente (603) und das Beleuchtungs-Gateway in der verteilten Computerumgebung in Datenübertragungverbindung bringt.

2. Computersystem nach Anspruch 1, wobei die Benutzerschnittstelle (604, 605) umfasst:
eine Beleuchtungs-Benutzerschnittstellenkomponente (604) für jeden Raum, die Szenariobeschreibungen von der Beleuchtungskomponente anfordert und eine Benutzersteuerungs-Zeigevorrichtung (605) so steuert, dass sie eine grafische Benutzerschnittstelle zum Steuern der Leuchten in dem Raum darstellt.

3. Computersystem nach Anspruch 1 oder 2, wobei das Beleuchtungs-Gateway (601) so eingerichtet ist, dass es die Beleuchtungskomponente (603) informiert, wenn sich der Zustand der Beleuchtungs-Steuerung (607) ändert.

4. Computersystem nach einem der Ansprüche 1 bis 3, wobei die Szenarios für einen Raum zu einer Gruppe zusammengefasst sind und ein Benutzer Szenarios in mehreren Gruppen von einer einzelnen Steuerungs-Zeigevorrichtung (605) aus steuern kann.

5. Verfahren der zum Steuern einer Umgebungsbedingung in einer verteilten Computerumgebung mit einer Vielzahl von Szenarios und einer Vielzahl von Benutzersteuerungs-Zeigevorrichtungen (605), wobei ein Szenario eine Sammlung von Szenario-Komponentendeskriptoren ist und jeder Szenario-Komponentendeskriptor wenigstens einen Stromkreis sowie einen Soll-Zustand für den Stromkreis identifiziert, und das umfasst:
Empfangen einer Auswahl eines Szenarios aus der Vielzahl von Szenarios von einer Benutzersteuerungs-Zeigevorrichtung (605) aus der Vielzahl von Benutzersteuerungs-Zeigevorrichtungen:
in Reaktion auf das Empfangen, Aufforderung an eine Stromkreis-Steuerung (607), jeden der durch die entsprechenden Szenario-Komponentendeskriptoren des Szenarios identifizierten Stromkreise in den Soll-Zustand für das Szenario zu versetzen; und
Empfangen einer Mitteilung von der Stromkreis-Steuerung (607), wenn die Stromkreise des Szenarios in den Soll-Zustand gebracht worden sind.

6. Verfahren nach Anspruch 5, wobei ein Szenario-Komponentendeskriptor des Weiteren eine dazugehörige Zeit zum Erreichen des Soll-Zustandes für den identifizierten Stromkreis enthält, und wobei die Aufforderung einschließt, dass die Stromkreissteuerung (607) aufgefordert wird, jeden der Stromkreise des Szenarios über die Zeiträume in den entsprechenden Soll-Zustand für das Szenario zu bringen, die durch die entsprechenden Zeiten zum Erreichen angegeben werden, die mit den Szenario-Deskriptorkomponenten verbunden sind.

7. Verfahren nach Anspruch 5 oder 6, wobei die Benutzersteuerungs-Zeigevorrichtung (605) eine Sensorbildschirm-Anzeigeeinrichtung ist.

8. Verfahren nach einem der Ansprüche 5 bis 7, wobei die Umgebungsbedingung wenigstens Beleuchtung und Heizung ist.

9. Verfahren nach einem der Ansprüche 5 bis 8, wobei die Benutzersteuerungs-Zeigevorrichtung (605) eine Vielzahl visueller Anzeigen darstellt, die jedem möglichen Szenario entsprechen.

10. Verfahren nach einem der Ansprüche 5 bis 9, wobei der Soll-Zustand keine Beleuchtung, gedämpfte Beleuchtung, normale Beleuchtung, helle Beleuchtung, blinkende Beleuchtung oder eine Temperatur ist.

11. Verfahren nach einem der Ansprüche 5 bis 10, das des Weiteren in Reaktion auf das Empfangen das Empfangen einer Anzeige des aktuellen Zustandes der Stromkreise von der Stromkreissteuerung (607) umfasst.

12. Verfahren nach einem der Ansprüche 5 bis 11, das des Weiteren das Wiedergeben der Information auf der Benutzersteuerungs-Zeigevorrichtung umfasst, um einen Benutzer wissen zu lassen, ob das Szenario aktiviert worden ist.

13. Verfahren nach Anspruch 12, wobei die Wiedergabe wenigstens das Bereitstellen einer visuellen Anzeige, die sich auf das Szenario bezieht, auf einer Anzeigeeinrichtung der Benutzersteuerungs-Zeigevorrichtung oder das Bereitstellen akustischer Rückmeldung einschließt.

14. Verfahren nach Anspruch 5, wobei der Soll-Zustand einen Effekt enthalten kann, der automatische Änderung einer Intensität eines Stromkreises sowie ein wiederholtes Ab- und Anschalten des Stromkreises einschließt.

## Revendications

1. Système informatique pour commander l'éclairage dans un environnement DCE, chaque lumière se trouvant sur un circuit, comprenant :
une structure de données de description de lieux (602) pour spécifier des circuits dans un lieu et des états cibles pour les circuits dans un lieu ;
une passerelle d'éclairage (601) pour extraire et fournir des descriptions de lieux à partir de ladite structure de données de description de lieux (602) lorsque cela est nécessaire et pour recevoir des demandes d'activation d'un lieu et pour notifier à un contrôleur d'éclairage (607) d'activer l'état cible pour chaque circuit dans le lieu pour lequel l'activation a été demandée ;
un composant d'éclairage (603) pour chaque espace à partir duquel les lumières peuvent être commandées pour demander et extraire les descriptions de lieux de la passerelle d'éclairage (601) et pour recevoir des demandes générées depuis une interface utilisateur (604, 605) afin d'activer un lieu et pour transférer la demande à la passerelle d'éclairage (601) ; et
un bus de communication (606),
dans lequel le bus de communication (606) couple de façon communicative ladite interface utilisateur (604, 605), ledit composant d'éclairage (603) et ladite passerelle d'éclairage dans l'environnement DCE.

2. Système informatique selon la revendication 1, dans lequel l'interface utilisateur (604, 605) comprend :
un composant d'interface utilisateur d'éclairage (604) pour chaque espace afin de demander au composant d'éclairage (603) des descriptions de lieux et afin de commander un dispositif de point de contrôle utilisateur (605) pour présenter une interface utilisateur graphique afin de commander les lumières au sein de l'espace.

3. Système informatique selon la revendication 1 ou 2, dans lequel la passerelle d'éclairage (601) est adaptée pour informer le composant d'éclairage (603) lorsque le contrôleur d'éclairage (607) change d'état.

4. Système informatique selon l'une quelconque des revendications 1 à 3, dans lequel les lieux pour un espace sont organisés en un groupe et dans lequel un utilisateur peut commander des lieux dans plusieurs groupes à partir d'un seul dispositif de point de contrôle (605).

5. Procédé pour contrôler une condition environnementale dans un environnement DCE possédant une pluralité de lieux et une pluralité de dispositifs de point de contrôle utilisateur (605), dans lequel un lieu est une collection de descripteurs de composants de lieu, dans lequel chaque descripteur de composants de lieu identifie au moins un circuit et un état cible pour le circuit, comprenant :
la réception d'une sélection d'un lieu parmi la pluralité de lieux depuis un dispositif de point de contrôle utilisateur (605) de la pluralité de dispositifs de point de contrôle utilisateur ;
en réponse à ladite réception, la demande à un contrôleur de circuits (607) de placer chacun des circuits identifiés par les descripteurs de composants de lieu correspondants du lieu à l'état cible défini pour le lieu ; et
la réception depuis le contrôleur de circuits (607) d'une notification lorsque les circuits du lieu ont été pilotés à l'état cible.

6. Procédé selon la revendication 5, dans lequel un descripteur de composants de lieu comprend en outre un temps associé pour atteindre l'état cible pour le circuit identifié, et dans lequel ladite demande comprend la demande au contrôleur de circuits (607) de placer chacun des circuits du lieu dans l'état cible respectif pour le lieu pendant les périodes de temps spécifiées par les temps respectifs pour atteindre l'état associé aux composants descripteurs du lieu.

7. Procédé selon la revendication 5 ou 6, dans lequel le dispositif de point de contrôle utilisateur (605) est un écran à commande tactile.

8. Procédé selon l'une quelconque des revendications 5 à 7, dans lequel la condition environnementale est au moins une condition parmi l'éclairage et le chauffage.

9. Procédé selon l'une quelconque des revendications 5 à 8, dans lequel le dispositif de point de contrôle utilisateur (605) affiche une pluralité d'indications visuelles correspondant à chaque lieu possible.

10. Procédé selon l'une quelconque des revendications 5 à 9, dans lequel l'état cible est celui parmi sans éclairage, faible éclairage, éclairage normal, éclairage vif, éclairage clignotant et une température.

11. Procédé selon l'une quelconque des revendications 5 à 10, comprenant en outre en réponse à ladite réception, la réception provenant du contrôleur de circuits (607) d'une indication de l'état actuel des circuits.

12. Procédé selon l'une quelconque des revendications 5 à 11, comprenant en outre le rendu de la notification sur le dispositif de point de contrôle utilisateur afin de permettre à l'utilisateur de savoir si le lieu a été activé.

13. Procédé selon la revendication 12, dans lequel ledit rendu comprend la délivrance d'au moins une indication visuelle liée au lieu sur un écran du dispositif de point de contrôle utilisateur et d'informations de retour sonores.

14. Procédé selon la revendication 5, dans lequel l'état cible peut comprendre un effet incluant une variation automatique d'une intensité d'un circuit et un allumage et une extinction répétés du circuit.
